# EUROPEAN PATENT SPECIFICATION

(11) **EP 3 545 260 B1**
(45) Date of publication and mention of the grant of the patent: **09.12.2020**
(21) Application number: 19706058.5
(22) Date of filing: 17.01.2019
(51) Int. Cl.: G01B 11/26, G01B 11/02, B65C 9/06

(54) **ALIGNMENT OF A WINDOW ON A CONTAINER**
AUSRICHTUNG EINES FENSTERS AUF EINEM BEHÄLTER
ALIGNEMENT D'UNE FENÊTRE SUR UN RÉCIPIENT

(30) Priority: 23.01.2018 US 201862620583 P
(43) Date of publication of application: 02.10.2019
(73) Proprietor: The Procter & Gamble Company, Cincinnati, OH 45202 (US)
(72) Inventor: BRUNNER, Matthew Cheney, Cincinatti, OH 45202 (US); TROMBLEY, Kurt Franklin, Cincinatti, OH 45202 (US)
(74) Representative: P&G Patent Germany
(86) International application number: PCT/US2019/013951
(87) International publication number: WO 2019/147456

(56) References cited:
- EP-A1- 1 057 733
- EP-A2- 1 120 348
- DE-A1- 19 927 668
- DE-B1- 2 806 080
- US-A1- 2010 289 892

## Description

### FIELD OF THE INVENTION

The present invention relates to methods and devices for aligning a window on a container to a predetermined rotational position without the use of another orientation aid.

### BACKGROUND OF THE INVENTION

Various containers, bottles, and tottles are used to hold, transport, and dispense liquids with a wide range of viscosities. In many cases, these containers are opaque. The containers are opaque because either the material the container is manufactured from is opaque or the container is wrapped in a packaging sleeve, label, or other material to display marketing and descriptive material. As such, typical containers do not allow a consumer to look through the container packaging material to view its contents.

Viewing the contents of a container can be advantageous to a consumer because it allows the consumer to visually inspect the contents, determine the amount remaining, and investigate the quality of the contents. Additionally, allowing a consumer to look through an opaque container can lead to higher sales of the product by providing an irresistible consumer experience.

Many containers are combined with a packaging sleeve or label to provide markings for product identification and other descriptive material. Thus, any window on a container must be aligned to a window in the packaging sleeve.

Alignment of the container is typically lost during the manufacturing process. Many containers are manufactured though the use of molding processes. Once the molding has cured, the molded containers are ejected from the mold and the orientation of the container is lost. Thus, there is a need for a process to orient the container after manufacture of the container, but prior to when the container enters the packaging phase of the process.

Typically, containers are aligned prior to the packaging process by using an orientation aid. Orientation aids include having an eyespot, embossing and/or debossing directly on the container, and the container itself. The containers can then be oriented and aligned to artwork printed on a packaging sleeve by using a camera to detect an eyespot printed on the container or to detecting the raised or lowered profile of embossing/debossing.

Printing an eyespot directly on a container that has recently exited a molding machine is challenging because it would require printing on hot, recently molded portions of the container. This means that the parts must cool prior to printing, which would dramatically slow the packing process. Thus, eyespots can be difficult to print on many containers.

Embossing and debossing are the processes of creating either raised (embossing) or recessed (debossing) relief images and designs in paper and other materials. These can be used as orientation aids throughout the manufacture and packaging process. However, these raised and recessed designs would still appear when using a shrink wrap packaging sleeve.

Some containers can use the container itself as an orientation aid. A container can be aligned using the shape of the container or other features (e.g. a handle), which can also be considered orientation aids. However, this container itself can only serve as an orientation aid if the container is asymmetrical and/or the container has some feature that can be used to orient the bottle such as labels on the bottle surface which can be recognized by mechanical or light scanning (DE2806080B1). Alignment can still be difficult when the container is symmetrical and has no exterior features to help orient the bottle prior to placement of the packaging sleeve.

Thus, there is a need for a method and device to allow for the alignment of a window on a container with a window on a packaging sleeve, label, or other packaging material without the use of an orientation aid.

### SUMMARY OF THE INVENTION

The invention is defined in the independent claims. Embodiments of the invention are set out in the dependent claims. A method for aligning a first window on a container to a predetermined rotational position comprising placing an electromagnetic radiation source on one side of the first window; placing a sensor on the opposite side of the first window; rotating the container; determining the location of the first window by using a sensor to detect the differences in the amount of electromagnetic radiation penetrating the first window as the container is rotated; and rotating the container to align the first window on the container to the predetermined rotational position.

A device for aligning a first window on a container to a predetermined rotational position comprising an electromagnetic radiation source; a sensor; a means for rotating a container; and wherein the light source and the sensor are positioned such that they are placed on opposite sides of the first window of the container to be aligned.

A method for aligning a first translucent window on a tottle and a second translucent window on a sleeve comprising placing a light source on one side of the first translucent window; placing a sensor on the opposite side of the first translucent window; rotating the tottle; determining the location of the first translucent window by using a sensor to detect the differences in the amount of light escaping the first translucent window as the tottle is rotated; and rotating the tottle to align the first window on the container to a predetermined rotational position corresponding to the second window on the sleeve.

These and other features, aspects, and advantages of the present invention will become evident to those skilled in the art from the detailed description that follows.

### BRIEF DESCRIPTION OF THE DRAWINGS

- FIG. 1: is a side view of a jar with a light source inside the jar and the sensor outside of the jar.
- FIG. 2: is a side view of a jar with a light source inside the jar and the sensor outside of the jar.
- FIG. 3: is a side view of a tottle with a light source outside the tottle and a sensor inside the tottle.
- FIG. 4: is a side view of a tottle with a light source outside the tottle and a sensor inside the tottle.
- FIG. 5: is a cross-sectional, top view of a container outside the scope of the present invention with a light source and a sensor outside of the container.
- FIG. 6: is a cross-sectional, top view of a container outside the scope of the present invention with a light source and a sensor outside of the container.
- FIG. 7: is a cross-sectional, top view of a container with a sensor inside the container and the light source outside the container.
- FIG. 8: is a cross-sectional, top view of a container with a sensor inside the container and the light source outside the container.

### DETAILED DESCRIPTION OF THE INVENTION

The present invention is directed to a method that can align a translucent or transparent window on a container to a predetermined rotational position corresponding to a window on a packaging sleeve, label, or other packaging material without the use of an orientation aid. A source of electromagnetic radiation is placed on one side of the translucent or transparent window on the container and a sensor is placed on the opposite side of the translucent or transparent window. The container is then rotated. The sensor can then determine the exact location of the translucent window by detecting the changes in the electromagnetic radiation that penetrates the container while rotated. A packaging sleeve, label, or other packaging material can then be placed on the container so that the translucent window on the container and the translucent window on the sleeve are aligned.

Additionally, the present invention is directed to the discovery of a device that can align a translucent window on a container to a predetermined rotational position corresponding to a translucent window on a packaging sleeve without the use of an orientation aid. Such a device includes an electromagnetic radiation source, a sensor and a means for rotating a container, wherein the electromagnetic radiation source and the sensor are positioned such that they are placed on opposite sides of the translucent window of the container to be aligned.

The present invention is thus based on the surprising discovery that a container and a packaging sleeve can be aligned without the use of an orientation aid on the container. Additionally, the present invention is based on the surprising discovery that light can be used in combination with a sensor and rotation can be used to determine the exact orientation of a container via a translucent window.

The foregoing summary is not intended to define every aspect of the invention, and additional aspects are described in other sections. In addition, the invention includes, as an additional aspect, all embodiments of the invention narrower in scope in any way than the variations defined by specific paragraphs set forth herein. For example, certain aspects of the invention that are described as a genus, and it should be understood that every member of a genus is, individually, an aspect of the invention. Also, aspects described as a genus or selecting a member of a genus should be understood to embrace combinations of two or more members of the genus. With respect to aspects of the invention described or claimed with "a" or "an," it should be understood that these terms mean "one or more" unless context unambiguously requires a more restricted meaning. The term "or" should be understood to encompass items in the alternative or together, unless context unambiguously requires otherwise. If aspects of the invention are described as "comprising" a feature, embodiments also are contemplated "consisting of' or "consisting essentially of" the feature.

Features of the compositions and methods are described below. Section headings are for convenience of reading and not intended to be limiting per se. The entire document is intended to be related as a unified disclosure, and it should be understood that all combinations of features described herein are contemplated, even if the combination of features are not found together in the same sentence, or paragraph, or section of this document. It will be understood that any feature of the methods or compounds described herein can be deleted, combined with, or substituted for, in whole or part, any other feature described herein.

All measurements referred to herein are made at 25°C unless otherwise specified.

As used herein, "translucent" is understood to describe a material that allows some electromagnetic radiation to pass through. A translucent material allows some light to pass through, such that some objects cannot be seen distinctly. Thus, a translucent material allows the consumer to see the material held within the translucent material, but in certain instances without much detail.

As used herein, "transparent" is understood to describe a material that allows nearly all electromagnetic radiation to pass through. A transparent material allows most of the light to pass through. Thus, a consumer will generally be able to see detailed images of other materials through transparent materials.

As used herein, "opaque" is understood to describe a material that does not allow nearly any electromagnetic radiation to pass through. An opaque material does not allow nearly any light to pass through. Thus, a consumer will not generally be able to see other materials through opaque materials.

The components of the present compositions are described in the following paragraphs.

Disclosed herein are devices for aligning a window on a container to a window on a packaging sleeve without the use of another orientation aid. Such devices comprise an electromagnetic radiation source, a sensor, and a means for rotating a container. The electromagnetic radiation source and the sensor are placed on opposite sides of the window on the container. The container can be rotated while the light source and the sensor are placed on opposite sides of the window on a container.

### Electromagnetic Radiation Source

Electromagnetic radiation describes all of the energies released into space by stars or the sun. Electromagnetic radiation includes energy in the forms of waves and/or photons. Electromagnetic radiation carries radiant energy. Electromagnetic radiation includes all electromagnetic radiation at every wavelength. Electromagnetic radiation includes, but is not limited to radio waves, microwaves, infrared radiation, visible light, ultraviolet radiation, x-ray, gamma rays, and/or mixtures thereof.

Electromagnetic radiation can be provided by any source capable of producing electromagnetic radiation. Sources of electromagnetic radiation include, but are not limited to, a light emitting diode, incandescent bulb, a fluorescent bulb, a compact fluorescent bulb, a halogen bulb, a metal halide bulb, a high pressure sodium bulb, a low pressure sodium bulb, and/or a mercury vapor bulb. The electromagnetic radiation source can be a laser.

### Sensor

The sensor is any device capable of sensing the presence or change in amount of any electromagnetic radiation. Suitable sensors include, but are not limited to, an electromagnetic radiation sensor, a contrast-sensing camera, a contrast-imaging camera, a color-sensing camera, a light sensor, a photoresistor, a photodiode, or a phototransistor. The sensor can be any industry available sensor. One example of an industry available sensor is a SICK® sensor.

### Means for Rotating a Container

The means for rotating the container can include any motor, robot, pulley-belt system, or other system for rotating a container. The means for rotating the container can be a servomotor. A servomotor is a rotary actuator or linear actuator that allows for precise control of angular or linear position, velocity, and acceleration. It can include a suitable motor coupled to a sensor for position feedback.

### Container

The container can be any device capable of holding a liquid, semi-solid(s), or solid(s). The container can be a squeeze container, a squeeze bottle, a bottle, a tottle, a vessel, a carafe, a flask, a jug, a jar, a can, a tube, a canteen, a canister, a carton, a cistern, a glass, a mug, and/or receptacle. A tottle is a bottle that when not in use the top, cap, or dispensing outlet of the container may be placed on a surface, because the tottle has no separate base to reside on when not in use. In certain instances, a tottle can also be described as defined in U.S. Application No. 14/493,726. The container can be opaque or semi-opaque.

The container can be flexible to an extent that it may deform in response to pressure differences arising between the inside of the body of the container and the ambient pressure. The container may be composed of a light weight flexible resilient material, such as polypropylene (PP), low density polyethylene (LDPE), high density polyethylene (HDPE), polyethylene terepthalate (PET) or the like, and may be produced by any desired method including blow molding a preform, blow molding an extruded parison or the like. The material may be white, transparent, opaque transparent, translucent, and/or colored.

The container can be rigid to an extent that it does not deform in response to pressure differences arising between the inside of the body of the container and the ambient pressure. The container may be composed of glass, metal, and/or a non-flexible plastic material.

The container, as disclosed herein, includes a window. The window on the container makes the contents of the container visually accessible. The window on the container can be circular, oval, square, rectangular, or be any two-dimensional polygon shape. The window on the container can also be a three-dimensional shape due to the thickness of the container wall. The window on the container can be along the side of the container. The window on the container, as disclosed herein in certain instances, does not include the portion of the container that is used to add or dispense liquids (i.e. dispensing outlet, neck, or other opening).

The window on the container can be any size smaller than the container. The surface area of the window on the container can be from about 1% to about 50%, from about 5% to about 50 %, from about 5% to about 40%, from about 10% to about 40%, or from about 10% to about 30% of the exterior surface area of the container.

The window on the container can be transparent, translucent, clear, and/or semi-opaque. The window on the container can be any window that allows for electromagnetic radiation to pass through or penetrate the window. The window on the container can be any window that allows for visible light to pass through or penetrate the window. The window on the container can be any window that can be seen through. The window can be made of the same material as the container. The window can differ from the container in the amount of light that can pass through the window.

### Sleeve

The sleeve is any sleeve that is placed over the container to identify and/or mark the product inside the container. The sleeve can be a packaging sleeve.

The sleeve, as disclosed herein, includes a window. The window on the sleeve can be circular, oval, square, rectangular, or be any two-dimensional polygon shape. The window on the sleeve can also be a three-dimensional shape due to the thickness of the sleeve. The window on the sleeve can be along the side of the sleeve. The window on the container, as disclosed herein, does not include the portion of the sleeve that allows for its placement on top of the container.

The window on the sleeve can be any size smaller than the sleeve. The surface area of the window on the sleeve can be from about 1% to about 50%, from about 5% to about 40%, from about 10% to about 40%, or from about 10% to about 30% of the exterior surface area of the sleeve.

The window on the sleeve can be approximately the same size and shape as the window on the container so that a consumer can view through both windows to view the contents of the container. The window on the sleeve can be smaller in surface area as the window on the container.

The window on the sleeve can be transparent, translucent, clear, and/or semi-opaque. The window on the sleeve can be any window that allows for electromagnetic radiation to pass through. The window on the sleeve can be any window that allows for visible light to pass through. The window on the sleeve can be any window that can be seen through. The window can be made of the same material as the sleeve. The window can differ from the sleeve in the amount of light that can pass through the window.

The sleeve can be made of oriented polymers including, but not limited to, polypropylene, polyethylene, polyethylene terephthalate, polyvinyl chloride. Sleeves can be made of bi-axially oriented polymers including but not limited to, polypropylene, polyethylene, polyethylene terephthalate, polyvinyl chloride. The sleeve can be shrunk in-line with the rest of the packaging processes or as an offline process. The process that can be used to shrink these plastic sleeves would be to use heat and/or steam. Other methods may be used to warm the polymers instead of heat and/or steam. This heating of the polymer causes the plastic to try to shrink back to its original shape prior to the orientation or biaxial orientation. This shrinking process allows the plastic sleeve to conform to the shape of the container it was placed around prior to warming the sleeve. The sleeve can have advertising, artwork, and/or consumer product information.

### Other Packaging Materials

In addition to the alignment of a window on a container to a window on a packaging sleeve, a window on a container can be aligned to other packaging materials, such as labels, wraps, tapes, stickers, tags, indicators, bags, sheets, boxes, or any other material that is used to cover a container and/or display marketing, product, and intellectual property information.

Additionally, the window on the container can be aligned to a predetermined rotational position that can aid in printing or screening marketing, product, and/or intellectual property information directly on the container.

Alternatively, the window on the container can be aligned to a predetermined rotational position that can aid in decorating the container to include various descriptive material and/or images directly on the container.

### Alignment of the Container

The electromagnetic radiation source and the sensor are placed on opposite sides of the window on the container. The electromagnetic radiation source can be placed inside the container and the sensor can be placed outside the container. The electromagnetic radiation source can be placed outside the container and the sensor can be placed inside the container.

A container with a window can be made via an extrusion process, extrusion blow molding process, and/or blow molding process, where an extruded tube of softened plastic is extruded through a die. The extruded tube can be made from one or more layers, and commonly contains more than 2 layers. The extruded tube can contain 3 layers, 4 layers, 5 layers, 6 layers, 7 layers, or more, each with a window. The window can be created by not allowing any layer containing an opaque colorant to be extruded in one small space of the die therefore creating a line of clear, translucent, or transparent plastic down the side of the extruded tube. Once this tube is extruded to the height of the finished container, a mold closes around the extruded tube and air pressure can be used to force the warm plastic to conform to the shape of the mold. The formed container is held briefly in the mold, until the plastic is cooled enough to withstand the process of ejecting it from the mold. The container is then dropped onto a conveyor belt, where the orientation of the container is lost. This conveyor belt commonly moves the containers to a storage/shipping container.

Once the container has been moved to the packaging site and brought to the packaging line, the containers can be oriented by hand, or oriented using methods and devices disclosed herein.

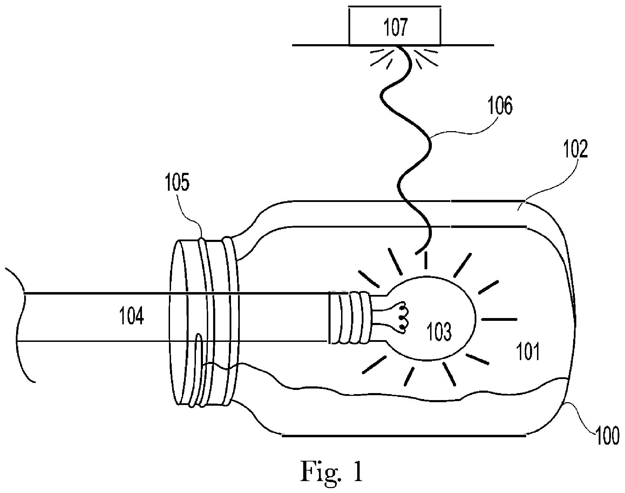

FIG. 1 illustrates a container 100, shown here as a jar, embodiment of the present invention for aligning a window 102 on the container 100. The container 100 has non-translucent portions 101 where a consumer would not be able to view through. To illustrate the light source 103, here an incandescent bulb, the non-translucent portions 101 of the container 100 are illustrated as a shaded portion. The light source 103 resides on a rod 104 that allows the light source 103 to be placed inside the container 100 through the neck 105 of the container 100. The container 100 can be rotated until the sensor 107 senses electromagnetic radiation 106 emitted from the light source 103. In FIG. 1, electromagnetic radiation 106 penetrates the window 102 on the container 100. When this event occurs, the rotation of the container 100 can be ceased as the orientation of the container 100 has been achieved such that the window 102 is in alignment with a predetermined rotational position that corresponds to a window on the packaging sleeve, label, or other packaging material that can be placed over the container 100 after alignment has occurred.

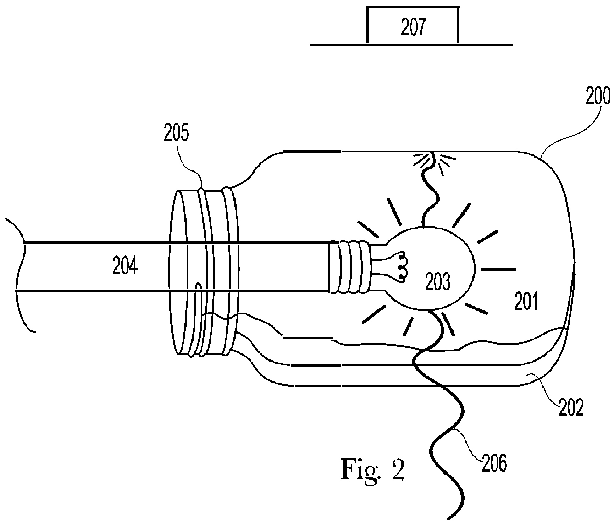

FIG. 2 illustrates a container 200, shown here as a jar, embodiment of the present invention for aligning a window 202 on the container 200. The container 200 has non-translucent portions 201 where a consumer would not be able to view through. To illustrate the light source 203, here an incandescent bulb, the non-translucent portions of the container 200 are illustrated as a shaded portion. The light source 203 resides on a rod 204 that allows the light source 203 to be placed inside the container 200 through the neck 205 of the container 200. The container 200 can be rotated until the sensor 207 senses electromagnetic radiation 206 emitted from the light source 203. In FIG. 2, the window 202 is pointed away from the sensor so the electromagnetic radiation 206 penetrates the window 202, but does not reach the sensor 207. As the container 200 is further rotated, the window 202 will reach alignment with the sensor 207 such that electromagnetic radiation 206 emitted from the light source 203 reaches the sensor 207 and indicates alignment of the window 202 on the container 200 to a predetermined rotational position that corresponds to a window on the packaging sleeve, label, or other packaging material that can be placed over the container 200 after alignment has occurred as in FIG. 1.

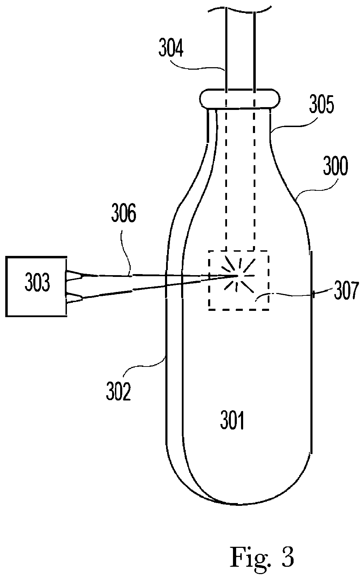

FIG. 3 illustrates a container 300, shown here as a tottle, embodiment of the present invention for aligning a window 302 on the container 300. The container 300 has non-translucent portions 301 where a consumer would not be able to view through. To illustrate the sensor 307, the non-translucent portions 301 of the container 300 are illustrated as a shaded portion. The sensor 307 resides on a rod 304 that allows the sensor 307 to be placed inside the container 300 through the neck 305 of the container 300. The container 300 can be rotated until the sensor 307 senses electromagnetic radiation 306 emitted from the light source 303, which in this embodiment resides outside of the container 300. In FIG. 3, electromagnetic radiation 306 penetrates the window 302 on the container 300. When this event occurs, the rotation of the container 300 can be ceased as the orientation of the container 300 has been achieved such that the window 302 is in alignment to a predetermined rotational position that corresponds to a window on the packaging sleeve, label, or other packaging material that can be placed over the container 300 after alignment has occurred.

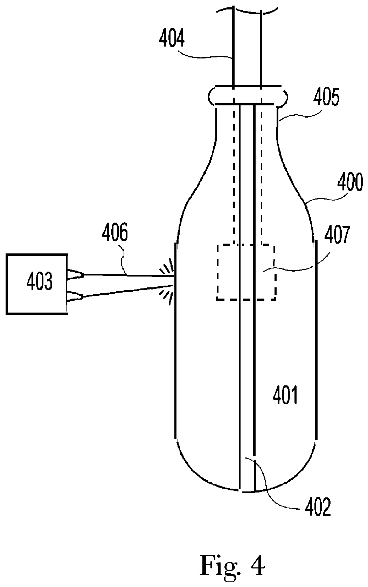

FIG. 4 illustrates a container 400, shown here as a tottle, embodiment of the present invention for aligning a window 402 on the container 400. The container 400 has non-translucent portions 401 where a consumer would not be able to view through. To illustrate the sensor 407, the non-translucent portions 401 of the container 400 are illustrated as a shaded portion. The sensor 407 resides on a rod 404 that allows the sensor 407 to be placed inside the container 400 through the neck 405 of the container 400. The container 400 can be rotated until the sensor 407 senses electromagnetic radiation 406 emitted from the light source 403, which in this embodiment resides outside of the container 400. In FIG. 4, the window 402 is pointed away from the light source 403 so the electromagnetic radiation 406 does not penetrate the window 402. As the container 400 is further rotated, the window 402 will reach alignment with the light source 403 such that electromagnetic radiation 406 emitted from the light source 403 reaches the sensor 407 and indicates alignment of the window 402 on the container 400 to a predetermined rotational position that corresponds to a window on the packaging sleeve, label, or other packaging material that can be placed over the container 400 after alignment has occurred, as in FIG. 3.

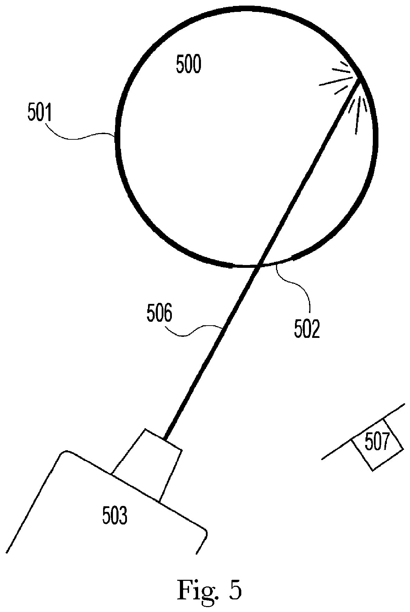

FIG. 5 illustrates a cross-sectional, top view of a container 500 embodiment outside the scope of the present invention for aligning a window 502 on the container 500. The container 500 has non-translucent portions 501 where a consumer would not be able to view through. The light source 503 and the sensor 507 are outside the container 500. Electromagnetic radiation 506 is emitted from the light source 503, and, in this embodiment, penetrates the window 502 on the container 500. The sensor 507 does not pick up as much electromagnetic radiation 506 because not as much electromagnetic radiation 506 is reflected when the container 500 is oriented such that the electromagnetic radiation 506 penetrates the translucent portions of the window 502.

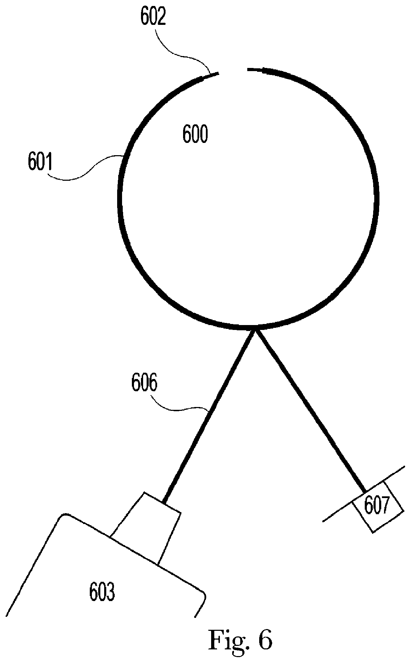

FIG. 6 illustrates a cross-sectional, top view of a container 600 embodiment outside the scope of the present invention for aligning a window 602 on the container 600. The container 600 has non-translucent portions 601 where a consumer would not be able to view through. The light source 603 and the sensor 607 are outside the container 600. Electromagnetic radiation 606 is emitted from the light source 603, and, in this embodiment, does not penetrate the window 602 on the container 600 because the container 600 has been rotated such that the window 602 is oriented away from the light source 603 and the sensor 607. Instead, the electromagnetic radiation 606 is reflected by the container 600 and is sensed by the sensor 607, which can be a contrast sensing camera. In this embodiment, the container 600 is aligned through the use of a contrast sensing camera which can detect differences in the contrast or intensity of the electromagnetic radiation 606. When the light source 603 is pointed towards the window 602, less electromagnetic radiation 606 will reach the sensor 607. However, when the light source 603 is pointed towards the non-translucent portions 601 of the container 600, more electromagnetic radiation 606 will reach the sensor 607.

Thus, in FIG. 5 and FIG. 6, the sensor detects differences in the amount of electromagnetic radiation rather than sensing the absence or presence of electromagnetic radiation 506 and 606 as in the other embodiments. Rotation of the container can allow for the differences in electromagnetic radiation.

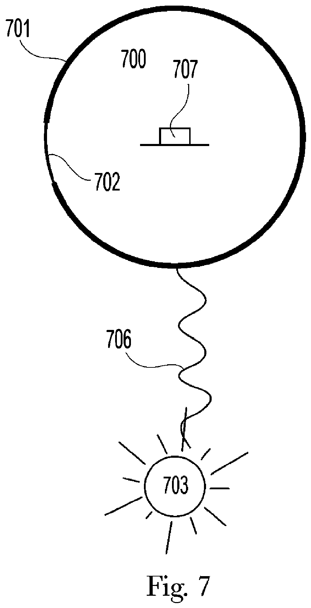

FIG. 7 illustrates a cross-sectional top view of a container 700 embodiment of the present invention for aligning a window 702 on the container 700. The container 700 has non-translucent portions 701 where a consumer would not be able to view through. The light source 703 is the sun and is outside the container 700. The sensor 707 is inside the container 700. The sensor 707 is attached to a rod that allows the sensor 707 to be placed through the neck of the container 700. In FIG. 7, the window 702 is oriented away from the direction of the sun's electromagnetic radiation 706. Thus, no electromagnetic radiation 706 reaches the sensor 707.

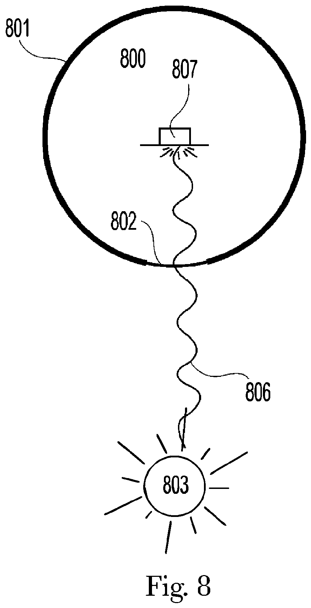

FIG. 8 illustrates a cross-sectional, top view of a container 800 embodiment of the present invention for aligning a window 802 on the container 800. The container 800 has non-translucent portions 801 where a consumer would not be able to view through. The light source 803 is the sun and is outside the container 800. The sensor 807 is inside the container 800. The sensor 807 is attached to a rod that allows the sensor 807 to be placed through the neck of the container 800. In FIG. 8, the container has been rotated such that the window 802 is oriented towards the direction of the light source's 803 electromagnetic radiation 806. Thus, electromagnetic radiation 806 reaches the sensor 807. After the container 800 is aligned with a predetermined rotational position that corresponds to a window on the packaging sleeve, label, or other packaging material that can be placed over the container 800 after alignment has occurred.

Thus, FIG. 1-8 describe how the container can be rotated into the correct alignment with a packaging sleeve such that the window on the container and the window on the packaging sleeve are in a facial relationship such that a consumer can see through the packaging sleeve and the container to view the contents of the container.

The container is rotated until its rotational position corresponds to align the window on the container to a predetermined rotational position. The predetermined rotational position can correspond to the position of a window on a packaging sleeve, label, or other packaging material because the rotational position of the window on the sleeve, label, or other packaging material is known throughout the manufacturing process. Thus, the known rotational position of the window on the sleeve, label, or other packaging material can be predetermined such that the window on the container can aligned with the predetermined rotational position of the window on the sleeve. Once the container is in the predetermined rotational position of the window on the sleeve, label, or other packaging material, the selecting packaging material can be placed over the container.

The predetermined rotational position can be selected and used to align and/or orient the container to receive a sleeve, label, or other packaging material. The predetermined rotational position can be selected and used to align/orient the container to be decorated or be printed directly on.

A computer, programmable controller, programmable logic controller, or other programmable logic device can control the alignment process. These programmable devices can be used to input the predetermined rotational position, determine threshold values for the sensors to correctly align the container, rotate the container, and other features of the alignment process that would be apparent to a person of ordinary skill in the art. The programmable devices can determine when the sensor has indicated the correct rotational position has been achieved through rotation and instruct the means for rotating a container to cease rotating the container.

After the alignment of the container is confirmed as described herein, the sleeve can be placed over the container. The sleeve can be pre-cut to the proper length and each sleeve is dropped over the container in the same orientation such that the window in the sleeve will align with the window on the container. Sleeves also can also be in a continuous roll. These sleeves in a continuous roll can be indexed to the correct length to properly fit over the container. The sleeves are cut to the correct length and then each sleeve is dropped over the container in the same orientation such that the window in the sleeve will align with the window on the container.

Alternatively, the sleeve can be rotated to achieve the correct alignment.

Disclosed herein is a method for aligning a first window on a container to a predetermined rotational position. Alignment can comprise placing an electromagnetic radiation source on one side of the first window; placing a sensor on the opposite side of the first window; rotating the container; determining the location of the first window by using a sensor to detect the differences in the amount of electromagnetic radiation escaping the first window as the container is rotated; and rotating the container to align the first window on the container to the predetermined rotational position.

Disclosed herein is a method for aligning a first translucent window on a tottle and a second translucent window on a packaging sleeve. Alignment can comprise placing a visible light source on one side of the first translucent window; placing a sensor on the opposite side of the first translucent window; rotating the tottle; determining the location of the first translucent window by using a sensor to detect the differences in the amount of visible light escaping the first translucent window as the tottle is rotated; and rotating the tottle to align the first translucent window on the tottle to the second translucent window on the sleeve.

Disclosed herein is a method for aligning a first window on a container to a predetermined rotational position without the use of printed, embossed, or debossed eyespots on the container.

The container can be rotated at least 1, 2, 3, 4, 5, 6, 7, 8, 9, 10, or more times. The container can be rotated while the electromagnetic radiation source emits electromagnetic radiation and the sensor senses differences in electromagnetic radiation intensity, magnitude, and/or quantity. The sensor is able to provide feedback to the device rotating the container to stop the rotation at the correct position to align the window on the container to the window on the sleeve that will be placed over the container.

The method can also comprise alignment with the window of the container where a lid is affixed. Once the proper orientation is determined using the method disclosed herein, the lid can be aligned to a skip in the threads around the neck of the container where the lid is screwed in.

The citation of any document is not an admission that it is prior art with respect to any invention disclosed or claimed herein or that it alone, or in any combination with any other reference or references, teaches, suggests or discloses any such invention.

While particular embodiments of the present invention have been illustrated and described, it would be obvious to those skilled in the art that various other changes and modifications can be made without departing from the scope of the invention. It is therefore intended to cover in the appended claims all such changes and modifications that are within the scope of this invention.

## Claims

1. A method for aligning a first window (102, 202, 302, 402, 702, 802) on a container (100, 200, 300, 400, 700, 800) to a predetermined rotational position comprising:
Placing an electromagnetic radiation source (103, 203, 303, 403, 703, 803) on one side of the first window;
Placing a sensor (107, 207, 307, 407, 707, 807) on the opposite side of the first window;
Rotating the container;
Determining the location of the first window by using the sensor to detect the differences in the amount of electromagnetic radiation (106, 206, 306, 406, 706, 806) penetrating the first window as the container is rotated;
and
Rotating the container to align the first window on the container to the predetermined rotational position, wherein the electromagnetic radiation source is placed inside the container and the sensor is placed on the outside of the container or wherein the electromagnetic radiation source is placed outside the container and the sensor is placed on the inside of the container.

2. The method of claim 1, wherein the container is rotated at least once during the time the sensor is determining the location of the first window, preferably wherein the container is rotated at least twice during the time the sensor is determining the location of the first window.

3. The method of claim 1 or 2, wherein the electromagnetic radiation source is infrared radiation, visible light, ultraviolet radiation, x-ray, gamma rays, or mixtures thereof, preferably wherein the electromagnetic radiation source is visible light.

4. The method of claim 3, wherein the visible light is provided by a light emitting diode, incandescent bulb, a fluorescent bulb, a compact fluorescent bulb, a halogen bulb, a metal halide bulb, a high pressure sodium bulb, a low pressure sodium bulb, or a mercury vapor bulb.

5. The method of claim 3, wherein the electromagnetic radiation source is a laser.

6. The method of any one of claims 1 to 5, wherein the sensor is an electromagnetic radiation sensor, a contrast-sensing camera, a contrast-imaging camera, a color-sensing camera, a light sensor, a photoresistor, a photodiode, or a phototransistor.

7. The method of any one of claims 1 to 6, wherein the first window is transparent, transluscent and/or semi-opaque and wherein the surface area of the window on the container can be from about 1% to about 50%, preferably from about 5% to about 50 %, more preferred from about 5% to about 40%, more preferred from about 10% to about 40%, or more preferred from about 10% to about 30% of the exterior surface area of the container.

8. The method of any one of claims 1 to 7, wherein the container is rotated by a servo motor.

9. The method of any one of claims 1 to 8, wherein the predetermined rotational position corresponds to the position of a second window on a packaging sleeve or the position of a third window on a label.

10. A device for aligning a first window (102, 202, 302, 402, 702, 802) on a container to a predetermined rotational position comprising:
an electromagnetic radiation source (103, 203, 303, 403, 703, 803) a sensor (107, 207, 307, 407, 707, 807) a means for rotating a container;
wherein the electromagnetic radiation source and the sensor are positioned such that they can be placed on opposite sides of the first window of the container to be aligned, so that the sensor can detect the differences in the amount of electromagnetic radiation penetrating the first window as the container is rotated, and
wherein the electromagnetic radiation source is placed inside the container and the sensor is placed on the outside of the container or wherein the electromagnetic radiation source is placed outside the container and the sensor is placed on the inside of the container.

11. The device of claim 10, wherein the electromagnetic radiation source is infrared radiation, visible light, ultraviolet radiation, x-ray, gamma rays, or mixtures thereof, preferably wherein the electromagnetic radiation source is visible light, more preferred, wherein the visible light is provided by a light emitting diode, incandescent bulb, a fluorescent bulb, a compact fluorescent bulb, a halogen bulb, a metal halide bulb, a high pressure sodium bulb, a low pressure sodium bulb, or a mercury vapor bulb.

12. The device of any one of claims 10 to 11, wherein the sensor is an electromagnetic radiation sensor, a contrast-sensing camera, a contrast-imaging camera, a color-sensing camera, a light sensor, a photoresistor, a photodiode, or a phototransistor.

13. The device of any one of claims 10 to 12, wherein the means for rotating the container is a servo motor.

## Patentansprüche

1. Verfahren zum Ausrichten eines ersten Fensters (102, 202, 302, 402, 702, 802) auf einem Behälter (100, 200, 300, 400, 700, 800) auf eine vorbestimmte Drehposition, umfassend:
Platzieren einer elektromagnetischen Strahlungsquelle (103, 203, 303, 403, 703, 803) auf einer Seite des ersten Fensters;
Platzieren eines Sensors (107, 207, 307, 407, 707, 807) auf der gegenüberliegenden Seite des ersten Fensters;
Drehen des Behälters;
Bestimmen der Lage des ersten Fensters durch Verwenden des Sensors, um die Unterschiede in der Menge elektromagnetischer Strahlung (106, 206, 306, 406, 706, 806) zu erkennen, die das erste Fenster durchdringt, wenn der Behälter gedreht wird;
und
Drehen des Behälters, um das erste Fenster auf dem Behälter auf die vorbestimmte Drehposition auszurichten, wobei die elektromagnetische Strahlungsquelle innerhalb des Behälters platziert wird und der Sensor auf der Außenseite des Behälters platziert wird oder wobei die elektromagnetische Strahlungsquelle außerhalb des Behälters platziert wird und der Sensor auf der Innenseite des Behälters platziert wird.

2. Verfahren nach Anspruch 1, wobei der Behälter mindestens einmal während der Zeit gedreht wird, in welcher der Sensor die Lage des ersten Fensters bestimmt, wobei der Behälter vorzugsweise mindestens zweimal während der Zeit gedreht wird, in welcher der Sensor die Lage des ersten Fensters bestimmt.

3. Verfahren nach Anspruch 1 oder 2, wobei die elektromagnetische Strahlungsquelle Infrarotstrahlung, sichtbares Licht, Ultraviolettstrahlung, Röntgenstrahlung, Gammastrahlung oder Mischungen davon ist, wobei die elektromagnetische Strahlungsquelle vorzugsweise sichtbares Licht ist.

4. Verfahren nach Anspruch 3, wobei das sichtbare Licht durch eine Leuchtdiode, Glühlampe, eine Fluoreszenzlampe, eine kompakte Fluoreszenzlampe, eine Halogenlampe, eine Metallhalogenidlampe, eine Hochdrucknatriumlampe, eine Niederdrucknatriumlampe oder eine Quecksilberdampflampe bereitgestellt wird.

5. Verfahren nach Anspruch 3, wobei die elektromagnetische Strahlungsquelle ein Laser ist.

6. Verfahren nach einem der Ansprüche 1 bis 5, wobei der Sensor ein elektromagnetischer Strahlungssensor, eine Kontrasterfassungskamera, eine Kontrastabbildungskamera, eine Farberfassungskamera, ein Lichtsensor, ein Photowiderstand, eine Photodiode oder ein Phototransistor ist.

7. Verfahren nach einem der Ansprüche 1 bis 6, wobei das erste Fenster strahlendurchlässig, lichtdurchlässig und/oder semiopak ist und wobei der Oberflächenbereich des Fensters auf dem Behälter etwa 1 % bis etwa 50 %, vorzugsweise etwa 5 % bis etwa 50 %, mehr bevorzugt etwa 5 % bis etwa 40 %, mehr bevorzugt etwa 10 % bis etwa 40 % oder mehr bevorzugt etwa 10 % bis etwa 30 %, des Außenoberflächenbereichs des Behälters betragen kann.

8. Verfahren nach einem der Ansprüche 1 bis 7, wobei der Behälter durch einen Servomotor gedreht wird.

9. Verfahren nach einem der Ansprüche 1 bis 8, wobei die vorbestimmte Drehposition der Position eines zweiten Fensters auf einer Verpackungshülle oder der Position eines dritten Fensters auf einem Etikett entspricht.

10. Vorrichtung zum Ausrichten eines ersten Fensters (102, 202, 302, 402, 702, 802) auf einem Behälter auf eine vorbestimmte Drehposition, umfassend:
eine elektromagnetische Strahlungsquelle (103, 203, 303, 403, 703, 803)
einen Sensor (107, 207, 307, 407, 707, 807)
ein Mittel zum Drehen eines Behälters;
wobei die elektromagnetische Strahlungsquelle und der Sensor so positioniert sind, dass sie auf gegenüberliegenden Seiten des ersten Fensters des auszurichtenden Behälters platziert werden können, sodass der Sensor die Unterschiede in der Menge elektromagnetischer Strahlung erfassen kann, die das erste Fenster durchdringt, wenn der Behälter gedreht wird, und
wobei die elektromagnetische Strahlungsquelle innerhalb des Behälters platziert wird und der Sensor auf der Außenseite des Behälters platziert wird oder wobei die elektromagnetische Strahlungsquelle außerhalb des Behälters platziert wird und der Sensor auf der Innenseite des Behälters platziert wird.

11. Vorrichtung nach Anspruch 10, wobei die elektromagnetische Strahlungsquelle Infrarotstrahlung, sichtbares Licht, Ultraviolettstrahlung, Röntgenstrahlung, Gammastrahlung oder Mischungen davon ist, wobei die elektromagnetische Strahlungsquelle vorzugsweise sichtbares Licht ist, wobei das sichtbare Licht mehr bevorzugt durch eine Leuchtdiode, Glühlampe, eine Fluoreszenzlampe, eine kompakte Fluoreszenzlampe, eine Halogenlampe, eine Metallhalogenidlampe, eine Hochdrucknatriumlampe, eine Niederdrucknatriumlampe oder eine Quecksilberdampflampe bereitgestellt wird.

12. Vorrichtung nach einem der Ansprüche 10 bis 11, wobei der Sensor ein elektromagnetischer Strahlungssensor, eine Kontrasterfassungskamera, eine Kontrastabbildungskamera, eine Farberfassungskamera, ein Lichtsensor, ein Photowiderstand, eine Photodiode oder ein Phototransistor ist.

13. Vorrichtung nach einem der Ansprüche 10 bis 12, wobei das Mittel zum Drehen des Behälters ein Servomotor ist.

## Revendications

1. Procédé d'alignement d'une première fenêtre (102, 202, 302, 402, 702, 802) sur un récipient (100, 200, 300, 400, 700, 800) sur une position de rotation prédéterminée comprenant :
le placement d'une source de rayonnement électromagnétique (103, 203, 303, 403, 703, 803) sur un côté de la première fenêtre ;
le placement d'un capteur (107, 207, 307, 407, 707, 807) sur le côté opposé de la première fenêtre ;
la rotation du récipient ;
la détermination de l'emplacement de la première fenêtre à l'aide du capteur pour détecter les différences de quantité de rayonnement électromagnétique (106, 206, 306, 406, 706, 806) pénétrant dans la première fenêtre lorsque le récipient est tourné ;
et
la rotation du récipient pour aligner la première fenêtre sur le récipient sur la position de rotation prédéterminée, dans lequel la source de rayonnement électromagnétique est placée à l'intérieur du récipient et le capteur est placé sur l'extérieur du récipient ou dans lequel la source de rayonnement électromagnétique est placée à l'extérieur du récipient et le capteur est placé à l'intérieur du récipient.

2. Procédé selon la revendication 1, dans lequel le récipient est tourné au moins une fois pendant que le capteur détermine l'emplacement de la première fenêtre, de préférence dans lequel le récipient est tourné au moins deux fois pendant que le capteur détermine l'emplacement de la première fenêtre.

3. Procédé selon la revendication 1 ou 2, dans lequel la source de rayonnement électromagnétique est un rayonnement infrarouge, une lumière visible, un rayonnement ultraviolet, des rayons x, des rayons gamma ou leurs mélanges, de préférence dans lequel la source de rayonnement électromagnétique est une lumière visible.

4. Procédé selon la revendication 3, dans lequel la lumière visible est fournie par une diode électroluminescente, une ampoule à incandescence, une ampoule fluorescente, une ampoule fluorescente compacte, une ampoule halogène, une ampoule à halogénure métallique, une ampoule à sodium haute pression, une ampoule à sodium basse pression ou une ampoule à vapeur de mercure.

5. Procédé selon la revendication 3, dans lequel la source de rayonnement électromagnétique est un laser.

6. Procédé selon l'une quelconque des revendications 1 à 5, dans lequel le capteur est un capteur de rayonnement électromagnétique, une caméra à détection de contraste, une caméra à imagerie de contraste, une caméra à détection des couleurs, un capteur de lumière, une photorésistance, une photodiode, ou un phototransistor.

7. Procédé selon l'une quelconque des revendications 1 à 6, dans lequel la première fenêtre transparente, translucide et/ou semi-opaque et dans lequel la surface de la fenêtre sur le récipient peut être d'environ 1 % à environ 50 %, de préférence d'environ 5 % à environ 50 %, de manière davantage préférée d'environ 5 % à environ 40 %, de manière davantage préférée d'environ 10 % à environ 40 %, ou de manière davantage préférée d'environ 10 % à environ 30 % de la surface extérieure du récipient.

8. Procédé selon l'une quelconque des revendications 1 à 7, dans lequel la rotation du récipient est effectuée par un servomoteur.

9. Procédé selon l'une quelconque des revendications 1 à 8, dans lequel la position de rotation prédéterminée correspond à la position d'une deuxième fenêtre sur une gaine d'emballage ou à la position d'une troisième fenêtre sur une étiquette.

10. Dispositif pour aligner une première fenêtre (102, 202, 302, 402, 702, 802) sur un récipient sur une position de rotation prédéterminée comprenant :
une source de rayonnement électromagnétique (103, 203, 303, 403, 703, 803)
un capteur (107, 207, 307, 407, 707, 807)
un moyen de rotation d'un récipient ;
dans lequel la source de rayonnement électromagnétique et le capteur sont positionnés de telle sorte qu'ils puissent être placés sur des côtés opposés de la première fenêtre du récipient à aligner, de telle sorte que le capteur puisse détecter les différences de quantité de rayonnement électromagnétique pénétrant dans la première fenêtre lorsque le récipient est tourné, et
dans lequel la source de rayonnement électromagnétique est placée à l'intérieur du récipient et le capteur est placé à l'extérieur du récipient ou dans lequel la source de rayonnement électromagnétique est placée à l'extérieur du récipient et le capteur est placé à l'intérieur du récipient.

11. Dispositif selon la revendication 10, dans lequel la source de rayonnement électromagnétique est un rayonnement infrarouge, une lumière visible, un rayonnement ultraviolet, des rayons x, des rayons gamma ou leurs mélanges, de préférence dans lequel la source de rayonnement électromagnétique est une lumière visible, de manière davantage préférée, dans lequel la lumière visible est fournie par une diode électroluminescente, une ampoule à incandescence, une ampoule fluorescente, une ampoule fluorescente compacte, une ampoule halogène, une ampoule à halogénure métallique, une ampoule à sodium haute pression, une ampoule à sodium basse pression ou une ampoule à vapeur de mercure.

12. Dispositif selon l'une quelconque des revendications 10 à 11, dans lequel le capteur est un capteur de rayonnement électromagnétique, une caméra à détection de contraste, une caméra à imagerie de contraste, une caméra à détection des couleurs, un capteur de lumière, une photorésistance, une photodiode ou un phototransistor.

13. Dispositif selon l'une quelconque des revendications 10 à 12, dans lequel le moyen de rotation du récipient est un servomoteur.
